# EUROPÄISCHE PATENTANMELDUNG

(11) **EP 3 764 434 A1**
(43) Veröffentlichungstag der Anmeldung: **13.01.2021**
(21) Anmeldenummer: 19185488.4
(22) Anmeldetag: 10.07.2019
(51) Int. Cl.: H01M 4/133, H01M 4/38, H01M 4/583, H01M 6/16, H01M 4/587, H01M 4/62, H01M 4/505

(54) **ELIMINIERUNG DES VOLTAGE-DELAYS UND STABILISIERUNG DER IMPEDANZ DURCH ELEKTROLYTZUSÄTZE IN ALKALI-METALLELEKTROCHEMISCHEN ZELLEN**

(71) Anmelder: LITRONIK Batterietechnologie GmbH, 01796 Pirna (DE)
(72) Erfinder: Bouazza, Sofiane, 01796 Pirna (DE)
(74) Vertreter: Galander, Marcus

(57) **Zusammenfassung**

Die vorliegende Erfindung betrifft eine Primärzelle, umfassend ein Alkalimetall als aktives Elektrodenmaterial, insbesondere als aktives Anodenmaterial, und ein Elektrolyt mit einer Borverbindung, wobei die Borverbindung eine Verbindung nach Formel (1), (2), (3), (4), (5), (6), (7) oder (8) ist:

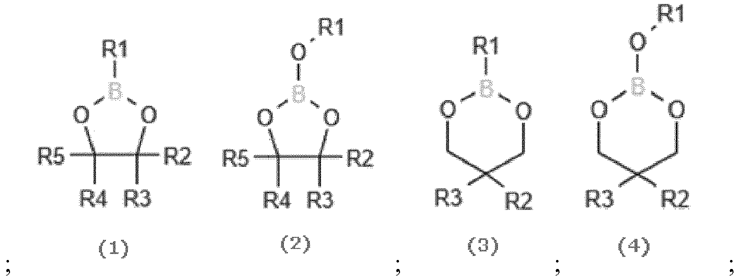

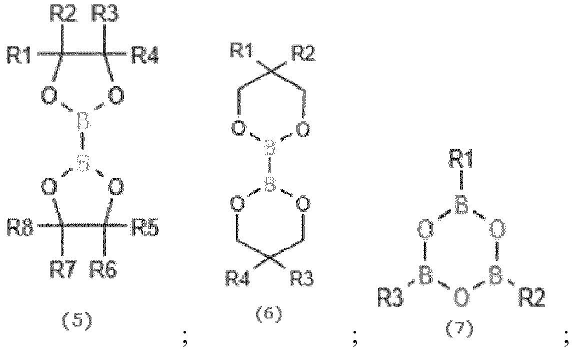

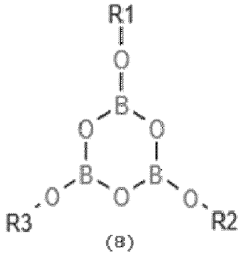

## Beschreibung

Die vorliegende Erfindung betrifft Elektrolytzusätze auf Borbasis für eine primäre alkalimetall-elektrochemische Zelle und eine entsprechende primäre alkalimetall-elektrochemische Zelle.

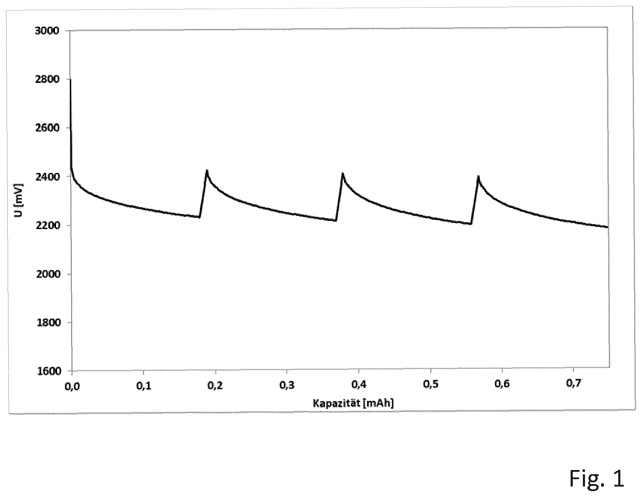

Bei elektrochemischen Zellen im Allgemeinen ist ein monotoner Pulsverlauf wünschenswert. Von einem monotonen Pulsverlauf spricht man, wenn der Spannungsverlauf unter Pulsbedingungen konstant bleibt oder sich bis zum Minimum am Ende des Pulses verringert, und die Minimumspannung des ersten Pulses in einer Pulsserie höher als die Minimumspannung des letzten Pulses ist. Der Spannungsverlauf dieser Pulsserie ist gewöhnlich rechteckig (Fig. 1).

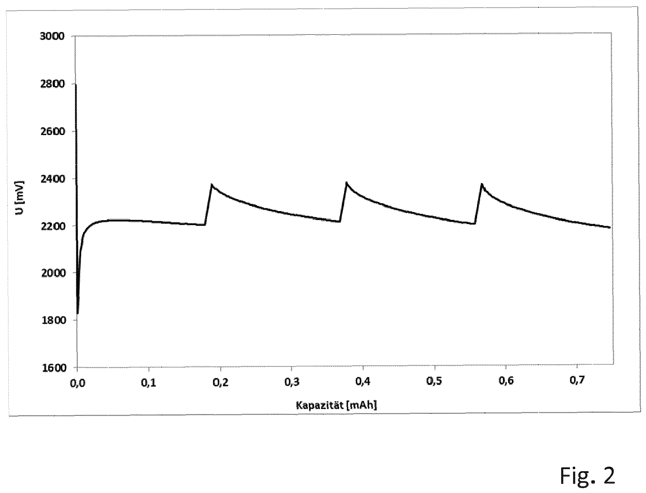

Eine Spannungsverzögerung, auch *voltage delay* genannt, ist eine unerwünschte Charakteristik im Entladeverlauf von implantierbaren Alkalimetallzellen unter Strompulsentladebedingungen. Ein *voltage delay* wird durch die Bildung relativ hochohmiger Deckschichten auf der Anodenoberfläche hervorgerufen, was zu einem Anstieg des Batterieinnenwiderstandes führt. Dieser Effekt ist erst zu sehen, wenn die Batterien mit hohen Pulsstromdichten belastet werden und dabei die Batteriespannung überproportional abfällt, d. h. die Spannung am Anfang des ersten Pulses niedriger als am Ende des Pulses ist oder wenn der erste Impuls niedriger als die Minimumspannung des letzten Impulses ist (Fig. 2).

Ein *voltage delay* zeigt sich normalerweise in Alkalimetall/Metalloxid- und Alkalimetall/Gemischtmetalloxidzellen bei über 40% DoD (*depth of discharge,* Endladetiefe) ihrer Kapazitätsentladung oder nach längerer Lagerung erstmals unter Pulsbelastung. In gewissen Fällen bildet sich eine hochohmige Deckschicht auf der Anodenoberfläche, beispielsweise durch Auflösung von Kathodenaktivmaterial oder durch Entladeprodukten im Batterieelektrolyt, welche unter bestimmten Pulsentladebedingungen zu einer Spannungsverzögerung bzw. zu einem nicht monotonen Verhalten führen kann.

Elektrolytzusätze wie Phosphate, Dicarbonate, Nitrite, Alkylphosphate und organische Zusätze mit Hydroxygruppen (-OH) und Carboxygruppen zur Unterdrückung oder Reduzierung des *voltage delays* für Alkalimetall/Übergangsmetalloxid (z.B. Li/SVO) und Alkalimetall/Mischoxide x und/oder Übergangsmetalloxid bzw. für Li/SVO Zellen sind im Stand der Technik bekannt.

Die vorgenannten Additive werden typischerweise für Alkalimetall/Übergangsmetalloxid-Systeme verwendet, insbesondere für Lithium/Silbervanadiumoxid(Li/SVO) und Lithium/Silbervanadiumoxid Mischkathoden (Li/SVO-Mischkathode), bei welchen es zu Impedanzanstiegen und Folge dessen zum *voltage delay* aufgrund hochohmiger Deckschichten aus Metall-Ablagerungen wie Vanadium, Silber und/oder Metalllegierungen auf Elektrodenoberfläche kommt. Die vorgenannten Additive sind jedoch nicht für Alkalimetall/Kohlenstoffmonofluorid (Li/CFx)-Systeme geeignet, bei welchen durch Fluorid-Lithium-Ablagerungen auf der Anodenoberfläche das *voltage delay* erfolgt.

Auch Organoborat-Salzen sind als Elektrolytleitsalz oder Elektrolytzusatz zur Senkung der Selbstentladung sowie zur Reduzierung/Eliminierung des *voltage delays* nach Lagerung bei Raum- und erhöhter Temperatur der Li/CFx-Zellen im Stand der Technik bekannt (beispielsweise aus US 7740986 B2). Die auf Organoborate basierten Elektrolyte zeigen jedoch im Vergleich zum Standardelektrolyt einen erhöhten Batteriewiderstand (siehe Beispiel 01).

Basierend auf diesem Hintergrund ist eine Aufgabe der vorliegenden Erfindung, einen Elektrolytzusatz für Primärzellen, vor allem mit Lithium als aktives Elektrodenmaterial, zur Verfügung zu stellen, der das *voltage delay* reduziert, vorzugsweise eliminiert, und die Batterieimpedanz reduziert.

Die Aufgabe wird durch eine Primärzelle mit den Merkmalen des Anspruchs 1 und durch die Verwendung einer Borverbindung mit den Merkmalen des Anspruchs 9 gelöst. Geeignete Ausführungsformen sind in den entsprechenden abhängigen Ansprüchen und in der folgenden Beschreibung wiedergegeben.

Gemäß Anspruch 1 wird eine Primärzelle zur Verfügung gestellt, die Alkalimetall als aktives Elektrodenmaterial, insbesondere als aktives Anodenmaterial, und ein Elektrolyt mit einer Borverbindung umfasst, insbesondere eine organische Borverbindung.

Der Begriff "Primärzelle" wird im Kontext der vorliegenden Beschreibung in seiner allgemein bekannten, technischen Bedeutung verwendet. Er bezeichnet insbesondere eine galvanische Zelle, die nach Entladung elektrisch nicht mehr aufladbar ist. Primärzellen werden zuweilen auch als Primärbatterien bezeichnet.

Bei der Borverbindung handelt es sich insbesondere um eine nicht-ionische Verbindung, also vorzugsweise kein Salz einer borhaltigen Säure.

Erfindungsgemäß ist insbesondere vorgesehen, dass die Borverbindung eine Verbindung nach Formel (1), (2), (3), (4), (5), (6), (7) oder (8) ist: 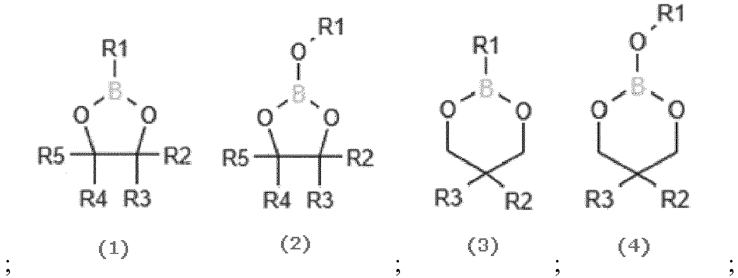 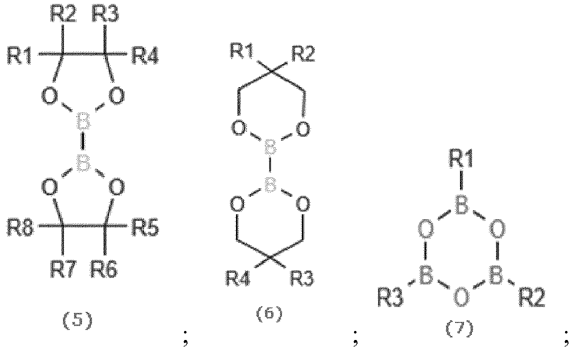 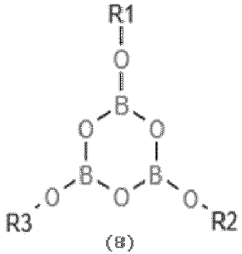 wobei R1, R2, R3, R4, R5, R6, R7 und R8 unabhängig voneinander ausgewählt sind aus der Gruppe umfassend Wasserstoff, Alkyl, Alkenyl, Cycloalkyl, Thioether, Heterocyclen, Aryl und Heteroaryl.

In einer Ausführungsform der erfindungsgemäßen Primärzelle ist vorgesehen, dass R1, R2, R3, R4, R5, R6, R7 und R8 unabhängig voneinander unsubstituiert sind oder einfach oder mehrfach substituiert mit wenigstens einem Substituenten ausgewählt aus der Gruppe umfassend: Alkyl, Fluoroalkyl, Alkoxy, Carbonyl, Carboxyl, Thiol, Thioalkoxid, Aryl, Ether, Thioether, Nitro, Cyano, Amino, Azido, Amidino, Hydrazino, Hydrazono, Carbamoyl, Sulfo, Sulfamoyl, Sulfonylamino, Alkylaminosulfonyl, Alkylsulfonylamino und/oder Halogen. Bevorzugte Substituenten umfassen Halogene, Fluoroalkyle und Cyano- bzw. Nitrilgruppen.

In einer Ausführungsform der erfindungsgemäßen Primärzelle ist vorgesehen, dass die Borbindung eine Verbindung nach Formel (1) ist, wobei R1 ein Alkyl, insbesondere eine C₁-C₆-Alkyl, insbesondere Methyl, Cyclopropyl oder Cyclohexyl, oder ein Aryl, insbesondere ein Phenyl, ein Benzyl oder ein Naphtyl ist, welches unsubstituiert oder mit einem oder mehreren C₁-C₄-Alkyl, -F, -Cl, -Br, -I, -CN, -CF₃ oder -OCF₃ substituiert ist, und R2 bis R4 unabhängig voneinander ein C₁-C4 Alkyl sind.

In einer Ausführungsform der erfindungsgemäßen Primärzelle ist vorgesehen, dass die Verbindung nach Formel (1)
- 4,4,5,5-Tetramethyl-2-(3,4,5-trifluorophenyl)-1,3,2-dioxaborolan,
- 2-(Bromomethyl)-4,4,5,5-tetramethyl-1,3,2-dioxaborolan;
- 2-Cyclopropyl-4,4,5,5-tetramethyl-l ,3,2-dioxaborolan;
- 2-Cyclohexyl-4,4,5,5-tetramethyl-l,3,2-dioxaborolan;
- 4,4,5,5-Tetramethyl-2-(naphthalen-1-ylmethyl)-1,3,2-dioxaborolan,
- 2-Benzyl-4,4,5,5-tetramethyl-1,3,2-dioxaborolan;
- 2-Phenyl-4,4,5,5-tetramethyl-1,3,2-dioxaborolan;
- 4,4,5,5-Tetramethyl-2-(1-naphthyl)-1,3,2-dioxaborolan;
- 2-(4-Chlorophenyl)-4,4,5,5-tetramethyl-1,3,2-dioxaborolan;
- 2-(4-Fluorophenyl)-4,4,5,5-tetramethyl-1,3,2-dioxaborolan;
- 4,4,5,5-Tetramethyl-2-(3,4,5-trifluorophenyl)-1,3,2-dioxaborolan;
- 2-(4-Bromophenyl)-4,4,5,5-tetramethyl-1,3,2-dioxaborolan;
- 2-(3,5-Dichlorophenyl)-4,4,5,5-tetramethyl-1,3,2-dioxaborolan;
- 2-(2-Iodophenyl)-4,4,5,5-tetramethyl-1,3,2-dioxaborolan;
- 4-(4,4,5,5-Tetramethyl-1,3,2-dioxaborolan-2-yl)benzonitril,
- 4,4,5,5-Tetramethyl-2-[3-(trifluoromethoxy)phenyl]-1,3,2-dioxaborolan;
- 2-(4,4,5,5-Tetramethyl-1,3,2-dioxaborolan-2-yl)anilin;
- 2-[2-(Trifluoromethyl)phenyl]-4,4,5,5-tetramethyl-1,3,2-dioxaborolan;
- 2-[3,5-Bis(trifluoromethyl)phenyl]-4,4,5,5-tetramethyl-1,3,2-dioxaborolan; oder
- 2-Fluoro-5-(4,4,5,5-tetramethyl-1,3,2-dioxaborolan-2-yl)benzonitril.
ist, vorzugsweise 4,4,5,5-Tetramethyl-2-(3,4,5-trifluorophenyl)-1,3,2-dioxaborolan.

In einer Ausführungsform der erfindungsgemäßen Primärzelle ist vorgesehen, dass die Borbindung eine Verbindung nach Formel (2) ist, wobei R1 bis R4 unabhängig voneinander ein C₁-C₄ Alkyl ist.

In einer Ausführungsform der erfindungsgemäßen Primärzelle ist vorgesehen, dass die Verbindung nach Formel (2)
- 2-Ethoxy-4,4,5,5-tetramethyl-1,3,2-dioxaborolan;
- 2-Methoxy-4,4,5,5-tetramethyl-l,3,2-dioxaborolan; oder
- 2-Isopropoxy-4,4,5,5-tetramethyl-1,3,2-dioxaborolan
ist.

In einer Ausführungsform der erfindungsgemäßen Primärzelle ist vorgesehen, dass die Borbindung eine Verbindung nach Formel (3) ist, wobei R1 ein Alkyl, ein Alkenyl, insbesondere ein Allyl, oder ein Aryl, insbesondere ein Benzyl, Phenyl, oder Benzoat, ist, welches unsubstituiert oder mit einem oder mehreren C₁-C₄-Alkyl, -F, -Cl, -Br, -I, -CN, - CF₃ oder -OCF₃ oder eine Verbindung nach Formel (3) substituiert ist, und R2 und R3 unabhängig voneinander ein C₁-C₄ Alkyl sind.

In einer Ausführungsform der erfindungsgemäßen Primärzelle ist vorgesehen, dass die Verbindung nach Formel (3)
- 2-Allyl-5,5-dimethyl-1,3,2-dioxaborinan;
- 5,5-Dimethyl-2-phenyl-1,3,2-dioxaborinan;
- 2,2'-(1,4-Phenylen)bis[5,5-dimethyl-1,3,2-dioxaborinan];
- 2-(2-Chlorophenyl)-5,5-dimethyl-1,3,2-dioxaborinan;
- 2-(1,3,2-Dioxaborinan-2-yl)benzonitril;
- 2-(2-Fluorophenyl)-5,5-dimethyl-1,3,2-dioxaborinan;
- 2-(4-Fluorophenyl)-5,5-dimethyl-1 ,3,2-dioxaborinan;
- 4,4'-Bis(5,5-dimethyl-1,3,2-dioxaborinan-2-yl)biphenyl;
- Ethyl 2-(5,5-Dimethyl-1,3,2-dioxaborinan-2-yl)benzoat;
- 2-(5,5-Dimethyl-1,3,2-dioxaborinan-2-yl)-6-(trifluoromethyl)benzonitril; oder
- 4-(Trifluoromethyl)-2-(5,5-dinethyl-1,3,2- dioxaborinan -2-yl)benzonitril
ist.

In einer Ausführungsform der erfindungsgemäßen Primärzelle ist vorgesehen, dass die Borbindung eine Verbindung nach Formel (4) ist, wobei R1, R2, und R3 unabhängig voneinander ein C₁-C₄ Alkyl sind.

In einer Ausführungsform der erfindungsgemäßen Primärzelle ist vorgesehen, dass die Verbindung nach Formel (4)
- 2-Isopropoxy-4,4,6-trimethyl-1,3,2-dioxaborinan;
- 2-Ethoxy-4,4,6-trimethyl-1,3,2-dioxaborinan; oder
- 2-Methoxy-4,4,6-trimethyl-1,3,2-dioxaborinan
ist.

In einer Ausführungsform der erfindungsgemäßen Primärzelle ist vorgesehen, dass die Borbindung eine Verbindung nach Formel (5) ist, wobei R1 bis R8 unabhängig voneinander ein C₁-C₄ Alkyl, ein C₁-C₄ Alkoxy, ein C₁-C₄ Carboxyl oder ein C₁-C₄ Carboxyamin sind, wobei das Amin mit einem oder mehreren C₁-C₄ Alkylen substituiert sein kann, oder R1 bis R4 zusammen ein Aryl, insbesondere ein Phenyl bilden und/oder R5 bis R8 zusammen ein Aryl, insbesondere ein Phenyl bilden.

In einer Ausführungsform der erfindungsgemäßen Primärzelle ist vorgesehen, dass die Verbindung nach Formel (5)
- Bis(pinacolato)diboron;
- Bis(catecholato)diboron;
- Bis(N,N,N',N'-tetramethyl-L-tartaramide glycolato)diboron;
- Bis(diethyl-D-tartratglycolato)diboron; oder
- Bis(diethyl-L-tartratglycolato)diboron
ist.

In einer Ausführungsform der erfindungsgemäßen Primärzelle ist vorgesehen, dass die Borbindung eine Verbindung nach Formel (6) ist, wobei R1 bis R4 unabhängig voneinander Wasserstoff oder ein C₁-C₄ Alkyl ist.

In einer Ausführungsform der erfindungsgemäßen Primärzelle ist vorgesehen, dass die Verbindung nach Formel (6)
- Bis(neopentylglycolato)diboron;
- Bis(hexylenglycolato)diboron;
- 2,2'-Bi-1,3,2-dioxaborinan
ist.

In einer Ausführungsform der erfindungsgemäßen Primärzelle ist vorgesehen, dass die Borbindung eine Verbindung nach Formel (7) ist, wobei R1 bis R 3 unabhängig voneinander ein Alkyl, insbesondere eine C₁-C₄-Alkyl, insbesondere Methyl, oder ein Aryl, insbesondere ein Phenyl, sind, welches unsubstituiert oder mit einem oder mehreren -F, -Cl, -Br, -I, -CN, -CF₃ oder -OCF₃ substituiert ist.

In einer Ausführungsform der erfindungsgemäßen Primärzelle ist vorgesehen, dass die Verbindung nach Formel (7)
- Trimethylboroxin.
- 2,4,6-Triphenylboroxin,
- 2,4,6-Tris(4-fluorophenyl)boroxin;
- 2,4,6-Tris(3,4,5-trifluorophenyl)boroxin;
- 2,4,6-Tris(3,4-difluorophenyl)boroxin; oder
- 2,4,6-Tris(3,4-dichlorophenyl)boroxin
ist.

In einer Ausführungsform der erfindungsgemäßen Primärzelle ist vorgesehen, dass die Borbindung eine Verbindung nach Formel (8) ist, wobei R1 bis R3 unabhängig voneinander ein C₁-C₄ Alkyl ist.

In einer Ausführungsform der erfindungsgemäßen Primärzelle ist vorgesehen, dass die Verbindung nach Formel (8) 2,4,6-Trimethoxyboroxin ist.

In einer Ausführungsform der erfindungsgemäßen Primärzelle ist vorgesehen, dass die Borverbindung im Elektrolyten in einer Konzentration im Bereich von 0,001 mol*l⁻¹ bis 0,5 mol*l⁻¹ vorliegt.

In einer Ausführungsform der erfindungsgemäßen Primärzelle ist vorgesehen, dass das Alkalimetall als aktives Elektrodenmaterial Lithium ist, und die Primärzelle eine Lithiumbatterie.

In einer Ausführungsform der erfindungsgemäßen Primärzelle ist vorgesehen, dass der Elektrolyt ein nichtwässriger Elektrolyt ist.

In einer Ausführungsform der erfindungsgemäßen Primärzelle ist vorgesehen, dass der nichtwässrige Elektrolyt
- ein erstes Lösungsmittel umfasst, welches ausgewählt wird aus der Gruppe bestehend aus einem Ester, einem Ether, einem Dialkylcarbonat und ein Gemisch davon, insbesondere Tetrahydrofuran, Methylacetat, Diglyme (Bis(2-methoxyethyl)ether), Triglyme (Tris(2-methoxyethyl)ether), Tetraglyme (Tetra(2-methoxyethyl)ether), 1,2-Dimethoxyethan, 1,2-Diethoxyethan, 1-Ethoxy, 2-Methoxyethan, Dimethylcarbonat, Diethylcarbonat, Dipropylcarbonat, Ethylmethylcarbonat, Methylpropylcarbonat, Ethylpropylcarbonat oder ein Gemisch davon, und
- ein zweites Lösungsmittel umfasst, welches ausgewählt ist aus der Gruppe bestehend aus einem cyclischen Carbonat, einem cyclischen Ester, einem cyclischen Amid und ein Gemisch davon, insbesondere Propylencarbonat, Ethylencarbonat, Butylencarbonat, γ-Butyrolacton, N-Methylpyrrolidinon oder ein Gemisch davon, oder aus einem polaren nichtwässrigen Lösungsmittel wie Acetonitril, Dimethylsulfoxid, Dimethylformamid, Dimethylacetamid, oder ein Gemisch davon.

In einer Ausführungsform der erfindungsgemäßen Primärzelle ist vorgesehen, dass der Elektrolyt ein wasserfreies Alkalisalz aufweist, insbesondere ein wasserfreies Lithiumsalz, vorzugsweise LiClO₄, LiPF₆, LiBF₄, LiAsF₆, LiSbF₆, LiClO₄, LiAlCl₄, LiGaCl₄, LiC(SO₂CF₃)₃, LiN(SO₂CF₃)₂, LiSCN, LiO₃SCF₂CF₃, LiC₆F₅SO₃, LiO₂CF₃, LiSO₃F, LiB(C₆H₅)₄, LiCF₃SO₃ oder ein Gemisch davon .

In einer Ausführungsform, umfasst die erfindungsgemäße Primärzelle weiterhin ein Kohlenstoffinonofluorid als aktives Elektrodenmaterial, insbesondere als aktives Kathodenmaterial. Dabei kann das Kohlenstoffmonofluorid an sich vorliegen oder mit Metalloxiden, vorzugsweise von Übergangsmetallen, Mischkathoden bilden, beispielsweise MnO₂, SVO (Silberoxid und Vanadiumpentoxid) Kupfersilbervanadiumoxid, Kobaltoxid, Nickeloxid, Kupferoxid, Kupfersulfid, Eisensulfid, Eisendisulfid, Titandisulfid, oder Gemische davon.

In einer Ausführungsform, umfasst die erfindungsgemäße Primärzelle ein Kathodenbindemittel, insbesondere Polytetrafluorethylen, Polyvinylidenfluorid (PVdF), Polytetrafluorethylen (PTFE), Polyolefine, vorzugsweise thermoplastische Elastomere, insbesondere Ethylen/Propylen-Dien-Terpolymere, oder Gemische davon.

In einer Ausführungsform umfasst die erfindungsgemäße Primärzelle Kohlenstoff, insbesondere in Form von Graphit, Graphitpulver oder Ruß, oder Aluminium, insbesondere Aluminiumpulver, Titan, insbesondere Titanpulver, Edelstahl, insbesondere Edelstahlpulver, oder Gemische davon als Leitadditiv.

Gemäß Anspruch 9 wird eine Borverbindung zur Verwendung als Elektrolytzusatz einer Primärzelle mit einem Alkalimetall als aktives Elektrodenmaterial zur Verfügung gestellt, insbesondere eine organische Borverbindung.

Erfindungsgemäß ist insbesondere vorgesehen, dass die Borverbindung eine Verbindung nach Formel (1), (2), (3), (4), (5), (6), (7) oder (8) ist: 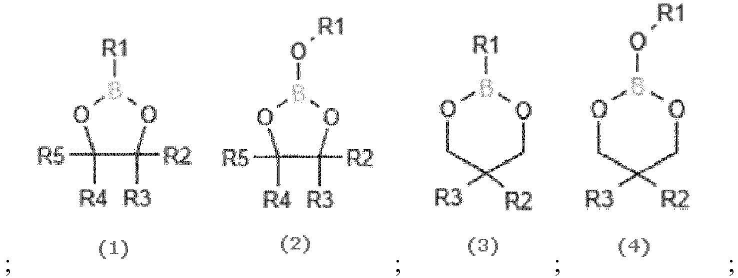 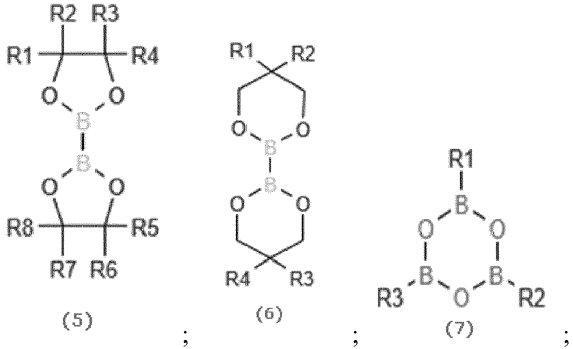 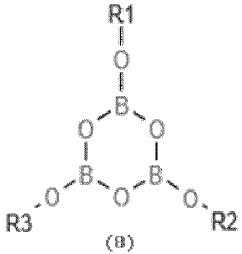 wobei R1, R2, R3, R4, R5, R6, R7 und R8 unabhängig voneinander ausgewählt sind aus der Gruppe umfassend Wasserstoff, Alkyl, Alkenyl, Cycloalkyl, Thioether, Heterocyclen, Aryl und Heteroaryl.

In einer Ausführungsform der erfindungsgemäßen Verwendung ist vorgesehen, dass R1, R2, R3, R4, R5, R6, R7 und R8 unabhängig voneinander unsubstituiert sind oder einfach oder mehrfach substituiert mit wenigstens einem Substituenten ausgewählt aus der Gruppe umfassend: Alkyl, Fluoroalkyl, Alkoxy, Carbonyl, Carboxyl, Thiol, Thioalkoxid, Aryl, Ether, Thioether, Nitro, Cyano, Amino, Azido, Amidino, Hydrazino, Hydrazono, carbamoyl, Sulfo, Sulfamoyl, Sulfonylamino, Alkylaminosulfonyl, Alkylsulfonylamino und/oder Halogene.

In einer Ausführungsform der erfindungsgemäßen Verwendung ist vorgesehen, dass die Borbindung eine Verbindung nach Formel (1) ist, wobei R1 ein Alkyl, insbesondere eine C₁-C₆-Alkyl, insbesondere Methyl, Cyclopropyl oder Cyclohexyl, oder ein Aryl, insbesondere ein Phenyl, ein Benzyl oder ein Naphtyl ist, welches unsubstituiert oder mit einem oder mehreren C₁-C₄-Alky, -F, -Cl, -Br, -I, -CN, -CF₃ oder -OCF₃ substituiert ist, und R2 bis R4 unabhängig voneinander ein C₁-C4 Alkyl sind.

In einer Ausführungsform der erfindungsgemäßen Verwendung ist vorgesehen, dass die Verbindung nach Formel (1)
- 4,4,5,5-Tetramethyl-2-(3,4,5-trifluorophenyl)-1,3,2-dioxaborolan,
- 2-(Bromomethyl)-4,4,5,5-tetramethyl-1,3,2-dioxaborolan;
- 2-Cyclopropyl-4,4,5,5-tetramethyl-1,3,2-dioxaborolan;
- 2-Cyclohexyl-4,4,5,5-tetramethyl-1,3,2-dioxaborolan;
- 4,4,5,5-Tetramethyl-2-(naphthalen-1-ylmethyl)-1,3,2-dioxaborolan,
- 2-Benzyl-4,4,5,5-tetramethyl-1,3,2-dioxaborolan;
- 2-Phenyl-4,4,5,5-tetramethyl-1,3,2-dioxaborolan;
- 4,4,5,5-Tetramethyl-2-(1-naphthyl)-1,3,2-dioxaborolan;
- 2-(4-Chlorophenyl)-4,4,5,5-tetramethyl-1,3,2-dioxaborolan;
- 2-(4-Fluorophenyl)-4,4,5,5-tetramethyl-l,3,2-dioxaborolan;
- 4,4,5,5-Tetramethyl-2-(3,4,5-trifluorophenyl)-1,3,2-dioxaborolan;
- 2-(4-Bromophenyl)-4,4,5,5-tetramethyl-1 ,3,2-dioxaborolan;
- 2-(3,5-Dichlorophenyl)-4,4,5,5-tetramethyl-l,3,2-dioxaborolan;
- 2-(2-Iodophenyl)-4,4,5,5-tetramethyl-1,3,2-dioxaborolan;
- 4-(4,4,5,5-Tetramethyl-1,3,2-dioxaborolan-2-yl)benzonitril,
- 4,4,5,5-Tetramethyl-2-[3-(trifluoromethoxy)phenyl]-1,3,2-dioxaborolan;
- 2-(4,4,5,5-Tetramethyl-1,3,2-dioxaborolan-2-yl)anilin;
- 2-[2-(Trifluoromethyl)phenyl]-4,4,5,5-tetramethyl-1,3,2-dioxaborolan;
- 2-[3,5-Bis(trifluoromethyl)phenyl]-4,4,5,5-tetramethyl-1,3,2-dioxaborolan; oder
- 2-Fluoro-5-(4,4,5,5-tetramethyl-1,3,2-dioxaborolan-2-yl)benzonitrie
ist, vorzugsweise 4,4,5,5-Tetramethyl-2-(3,4,5-trifluorophenyl)-1,3,2-dioxaborolan.

In einer Ausführungsform der erfindungsgemäßen Verwendung ist vorgesehen, dass die Borbindung eine Verbindung nach Formel (2) ist, wobei R1 bis R4 unabhängig voneinander ein C₁-C₄ Alkyl sind.

In einer Ausführungsform der erfindungsgemäßen Verwendung ist vorgesehen, dass die Verbindung nach Formel (2)
- 2-Ethoxy-4,4,5,5-tetramethyl-1,3,2-dioxaborolan;
- 2-Methoxy-4,4,5,5-tetramethyl-l,3,2-dioxaborolan; oder
- 2-Isopropoxy-4,4,5,5-tetramethyl-1,3,2-dioxaborolan
ist.

In einer Ausführungsform der erfindungsgemäßen Verwendung ist vorgesehen, dass die Borbindung eine Verbindung nach Formel (3) ist, wobei R1 ein Alkyl, ein Alkenyl, insbesondere ein Allyl, oder ein Aryl, insbesondere ein Benzyl, Phenyl, oder Benzoat, ist, welches unsubstituiert oder mit einem mehreren C₁-C₄-Alky, -F, -Cl, -Br, -I, -CN, -CF₃ oder -OCF₃ substituiert ist, und R2 und R3 unabhängig voneinander ein C₁-C₄ Alkyl sind.

In einer Ausführungsform der erfindungsgemäßen Verwendung ist vorgesehen, dass die Verbindung nach Formel (3)
- 2-Allyl-5,5-dimethyl-1,3,2-dioxaborinan;
- 5,5-Dimethyl-2-phenyl-1,3,2-dioxaborinan;
- 2,2'-(1,4-Phenylen)bis[5,5-dimethyl-1,3,2-dioxaborinan];
- 2-(2-Chlorophenyl)-5,5-dimethyl-1,3,2-dioxaborinan;
- 2-(1,3,2-Dioxaborinan-2-yl)benzonitril;
- 2-(2-Fluorophenyl)-5,5-dimethyl-1,3,2-dioxaborinan;
- 2-(4-Fluorophenyl)-5,5-dimethyl-1,3,2-dioxaborinan;
- 4,4'-Bis(5,5-dimethyl-1,3,2-dioxaborinan-2-yl)biphenyl;
- Ethyl 2-(5,5-Dimethyl-1,3,2-dioxaborinan-2-yl)benzoat;
- 2-(5,5-Dimethyl-1,3,2-dioxaborinan-2-yl)-6-(trifluoromethyl)benzonitril; oder
- 4-(Trifluoromethyl)-2-(5,5-dinethyl-1,3,2-dioxaborinan -2-YL)benzonitril
ist.

In einer Ausführungsform der erfindungsgemäßen Verwendung ist vorgesehen, dass die Borbindung eine Verbindung nach Formel (4) ist, wobei R1, R2, und R3 unabhängig voneinander ein C₁-C₄ Alkyl sind.

In einer Ausführungsform der erfindungsgemäßen Verwendung ist vorgesehen, dass die Verbindung nach Formel (4)
- 2-Isopropoxy-4,4,6-trimethyl-1,3,2-dioxaborinan;
- 2-Ethoxy-4,4,6-trimethyl-1,3,2-dioxaborinan; oder
- 2-Methoxy-4,4,6-trimethyl-1,3,2-dioxaborinan
ist.

In einer Ausführungsform der erfindungsgemäßen Verwendung ist vorgesehen, dass die Borbindung eine Verbindung nach Formel (5) ist, wobei R1 bis R8 unabhängig voneinander ein C₁-C₄ Alkyl, ein C₁-C₄ Alkoxy, ein C₁-C₄ Carboxy oder ein C₁-C₄ Carboxyamin sind, wobei das Amin mit einem oder mehreren C₁-C₄ Alkylen substituiert sein kann, oder R1 bis R4 zusammen ein Aryl, insbesondere ein Phenyl bilden und/oder R5 bis R8 zusammen ein Aryl, insbesondere ein Phenyl bilden.

In einer Ausführungsform der erfindungsgemäßen Verwendung ist vorgesehen, dass die Verbindung nach Formel (5)
- Bis(pinacolato)diboron;
- Bis(catecholato)diboron;
- Bis(N,N,N',N'-tetramethyl-L-tartaramide glycolato)diboron;
- Bis(diethyl-D-tartratglycolato)diboron; oder
- Bis(diethyl-L-tartratglycolato)diboron
ist.

In einer Ausführungsform der erfindungsgemäßen Verwendung ist vorgesehen, dass die Borbindung eine Verbindung nach Formel (6) ist, wobei R1 bis R4 unabhängig voneinander Wasserstoff oder ein C₁-C₄ Alkyl ist.

In einer Ausführungsform der erfindungsgemäßen Verwendung ist vorgesehen, dass die Verbindung nach Formel (6)
- Bis(neopentylglycolato)diboron;
- Bis(hexylenglycolato)diboron;
- 2,2'-Bi-1,3,2-dioxaborinan
ist.

In einer Ausführungsform der erfindungsgemäßen Verwendung ist vorgesehen, dass die Borbindung eine Verbindung nach Formel (7) ist, wobei R1 bis R 3 unabhängig voneinander ein Alkyl, insbesondere eine C₁-C₄-Alkyl, insbesondere Methyl, oder ein Aryl, insbesondere ein Phenyl, sind, welches unsubstituiert oder mit einem oder mehreren-F, -Cl, -Br, -I, -CN, -CF₃ oder -OCF₃ substituiert ist.

In einer Ausführungsform der erfindungsgemäßen Verwendung ist vorgesehen, dass die Verbindung nach Formel (7)
- Trimethylboroxin.
- 2,4,6-Triphenylboroxin,
- 2,4,6-Tris(4-fluorophenyl)boroxin;
- 2,4,6-Tris(3,4,5-trifluorophenyl)boroxin;
- 2,4,6-Tris(3,4-difluorophenyl)boroxin; oder
- 2,4,6-Tris(3,4-dichlorophenyl)boroxin
ist.

In einer Ausführungsform der erfindungsgemäßen Verwendung ist vorgesehen, dass die Borbindung eine Verbindung nach Formel (8) ist, wobei R1 bis R3 unabhängig voneinander ein C₁-C₄ Alkyl ist.

In einer Ausführungsform der erfindungsgemäßen Verwendung ist vorgesehen, dass die Verbindung nach Formel (8) 2,4,6-Trimethoxyboroxin ist.

In einer Ausführungsform der erfindungsgemäßen Verwendung ist vorgesehen, dass das Alkalimetall als aktives Elektrodenmaterial Lithium ist, und die Primärzelle eine Lithiumbatterie.

Weitere Merkmale und Vorteile der Erfindung werden nachfolgend anhand der Figurenbeschreibung von Ausführungsbeispielen erläutert. Es zeigen:
- Fig. 1: den Pulsverlauf einer elektrochemischen Zelle ohne *voltage delay,*
- Fig. 2: den Pulsverlauf einer elektrochemischen Zelle mit *voltage delay,*
- Fig. 3: den Impedanzverlauf einer Batterie mit einem im Stand der Technik bekannten Elektrolytzusatz (Lithium-bis-(oxalato)borat (LiBOB)),
- Fig. 4: Impedanzverlauf (a), und Pulsentladung und Pulsverlauf bei 180mAh Entladetiefe (B) einer Batterie mit einem erfindungsgemäßen Elektrolytzusatz (4,4,5,5-Tetramethyl-2-(3,4,5-trifluorophenyl)-1,3,2-dioxaborolane (TMTFPDDB),
- Fig. 5: Impedanzverlauf (a) und Pulsentladung und Pulsverlauf bei 180mAh Entladetiefe (B) einer Batterie mit einem weiteren erfindungsgemäßen Elektrolytzusatz (Trimethylboroxine (TMB)).

### Beispiele:

Lithium-Kohlenstoffmonofluorid-Zellen (Li/CFx) haben die höchste theoretische spezifische Kapazität im Vergleich zu kommerziellen Lithiumprimärbatterien. Die Gesamtgleichung der Entladung lautet folgendermaßen:

CFx + xLi → C + xLiF

Das LiF ist ein anionischer und elektrischer Isolator, welcher sich zum einen an die Oberfläche der Kathodenporen haftet und zum anderen im Elektrolyt teilweise auflöst. Bei Entladetiefe zwischen MOL- und EOL-Zustand erhöht sich die Fluoridkonzentration im Elektrolyt, was zu einer hochohmigen Deckschicht von Lithium-Fluorid-Verbindungen auf der Anodenoberfläche führt (Tabelle 1). Unter bestimmten Pulsentladebedingungen kann dies zu einer Spannungsverzögerung bzw. einem nicht monotonen Verhalten führen.

**Tabelle 1: Fluoridgehalt auf Lithiumanodenoberfläche bei verschiedenen Entladetiefen**

| Zelle Nr | DoD [%] | Fluorid [µg] |
|---|---|---|
| Zelle 1 | 50 | 2,05 |
| Zelle 2 | 50 | 1,95 |
| Zelle 3 | 50 | 2,15 |
| Zelle 4 | 80 | 4,40 |
| Zelle 5 | 80 | 3,90 |
| Zelle 6 | 80 | 4,15 |
| Zelle 7 | 90 | 23,45 |
| Zelle 8 | 90 | 21,00 |
| Zelle 9 | 90 | 24,65 |
| Zelle 10 | 95 | 63,10 |
| Zelle 11 | 95 | 69,75 |
| Zelle 12 | 95 | 66,60 |

Die vorliegende Erfindung betrifft im Allgemeinen eine elektrochemische Alkalimetallzelle und insbesondere eine Lithium/Kohlenstoffinonofluorid- oder eine Lithium/Kohlenstoffinonofluorid-Metalloxidzelle, welche für Anwendungen mit Strompulsentladung und ohne Spannungsverzögerung geeignet sind. Genauer genommen betrifft die vorliegende Erfindung eine elektrochemische Lithiummetallzelle mit einem nicht wässrigen Elektrolyt, welcher durch einen Elektrolytzusatz das *voltage delay* verhindert.

Die vorliegende Erfindung betrifft insbesondere Dioxaborolan-, Diboron- und Boroxin-Elektrolytzusätze für alkali-metallelektrochemische Zellen mit Kohlenstoffmonofluorid (CFx) oder CFx-Übergangsmetalloxide Mischkathoden (z. B. Li/CFx-MnO2, Li/CFx-SVO, ...) als Kathodenaktivmaterial. Das Li/CFx-System zeigt unter Pulsbedingungen vor End of Life "EOL" Zustand ein *voltage delay.* Um das *voltage delay* zu unterdrücken und den Impedanzanstieg zu reduzieren werden erfindungsgemäß insbesondere Dioxaborolan-, Diboron- und Boroxin-Zusätze dem Elektrolyt hinzugefügt.

Der Vorteil dieser Erfindung ist die Bildung eines SEI-Films (Solide Electrolyte Interface) auf der negativen Elektrode (beispielsweise eines Lithiummetalls), welcher die Elektrodenoberfläche schützt, d. h. der Elektrolytzusatz reduziert sich auf der Anodenoberfläche und schützt diese vor Bildung einer Hochwiderstandsdeckschicht, was wiederum der Stabilisierung des Batterieinnenwiderstands dient, die Entladungsleistung verbessert und das *voltage delay* eliminiert (Tabelle 2).

**Tabelle 2: Borgehalt auf Lithiumanodenoberfläche bei EOL-Zustand**

| Zelle Nr. | Bor [µg] |
|---|---|
| Zelle 13 | 11,75 |
| Zelle 14 | 10,42 |

Vorzugsweise betrifft die Erfindung die vorstehend beschriebene elektrochemische Alkalimetallzelle mit nicht wässerigen, ionisch leitenden Elektrolyten und wenigstens einer Verbindung gemäß der allgemeinen Formel (1), (2), (3), (4), (5), (6), (7), und (8).

Die elektrochemischen Zellen für die Ausführung- und Vergleichsbeispiele wurden mit aus folgenden Komponenten hergestellt:

| | Beispiel 1 | Beispiel 2 | Beispiel 3 |
|---|---|---|---|
| Elektrolytzusatz | LiBOB | TMTFPDDB | TMB |
| Kathodenaktivmaterial | CFx | | |
| Leitadditive (Gewichtanteil%) | Graphit (3%) und Ruß (2%) | | |
| Kathodenbindemittel (Gewichtanteil %) | Polytetrafluoroethylen (3%) | | |
| Elektrolyt | 1M LiClO4 in 1,2-dimethoxyethan, Ethylencarbonat und Propylencarbonat (4:4:2) | | |
| Anode | Lithium | | |

### Beispiel 1 (Vergleichsbeispiel):

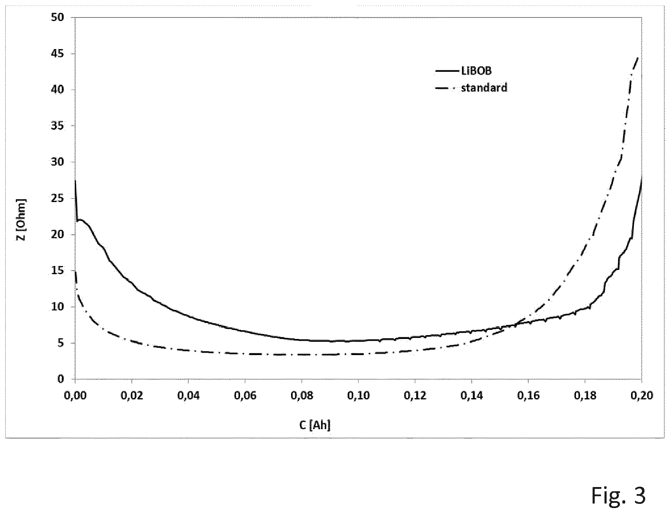

In Figur 3 sind die Impedanzverläufe der Entladung unter 12,7 KOhm und täglicher Pulsbelastung von 10 mA/156s dargestellt, wobei jeweils mit einem Standardelektrolyten (ohne Elektrolytzusatz) und Standardelektrolyt mit 0,075 M Lithium-bis-(oxalato)borat (LiBOB) als Zusatz gemessen wurde. Wie eingangs erwähnt ist LiBOB ein im Stand der Technik bekannter Elektrolytzusatz. Deutlich zu erkennen ist hierbei eine Zunahme des Batterieinnenwiderstands bei zunehmender Entladung.

### Beispiel 2:

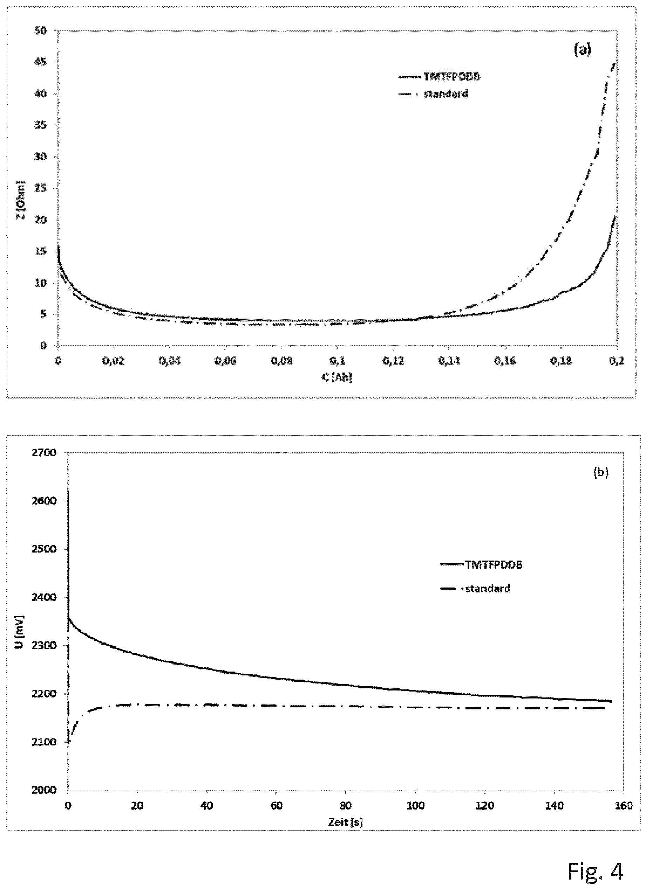

In Figur 4 sind die Entladedaten unter 12,7 KOhm und täglicher Pulsbelastung von 10mA/156s illustriert, wobei der Impedanzverlauf der Batterien während der Entladung in (a) und der Pulsverlauf bei 180 mAh in (b) dargestellt ist. Verwendet wurden ein Standardelektrolyt und der Standardelektrolyt mit 0,075 M eines erfindungsgemäßen Elektrolytzusatzes, in diesem Falle 4,4,5,5-Tetramethyl-2-(3,4,5-trifluorophenyl)-1,3,2-dioxaborolane (TMTFPDDB). Deutlich zu erkennen ist, dass der Batterieinnenwiderstand über weite Entladungsbereiche durch den erfindungsgemäßen Elektrolytzusatz nicht ansteigt.

### Beispiel 3:

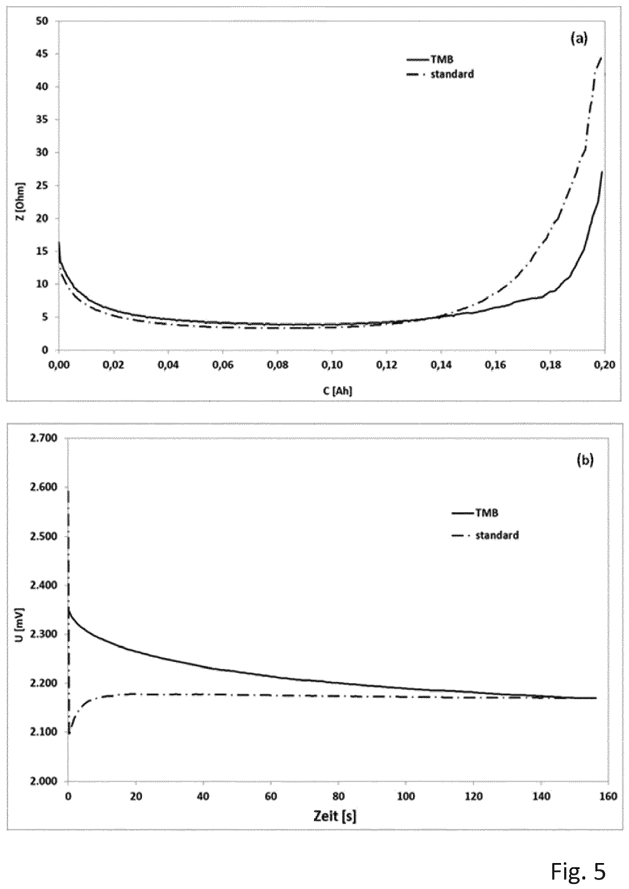

In Figur 5 sind die Entladedaten unter 12,7 KOhm und täglicher Pulsbelastung von 10mA/156s illustriert, wobei der Impedanzverlauf der Batterien während der Entladung in (a) und der Pulsverlauf bei 180 mAh in (b) dargestellt ist.. Verwendet wurden ein Standardelektrolyt und der Standardelektrolyt mit 0,075 M eines erfindungsgemäßen Elektrolytzusatzes, in diesem Falle Trimethylboroxine (TMB). Auch hier ist deutlich zu erkennen ist, dass der Batterieinnenwiderstand über weite Entladungsbereiche durch den erfindungsgemäßen Elektrolytzusatz nicht ansteigt.

Zusammenfassend konnte gezeigt werden, dass insbesondere durch die Anwendung von Dioxaborolan-, Diboron- und Boroxin-Zusätzen kann ein *voltage delay* eliminiert und die Batterieimpedanz reduziert werden kann.

Bei implantierbaren Batterien für Herztherapien wurde von den Batterien, welche Voltage Delays zeigten nur ein Teil der gesamten Kapazität verwendet (bis zur Erscheinung des Voltage Delays). Durch Dioxaborolan-, Diboron- und Boroxin-Elektrolytzusätze kann die Gesamtentladekapazität der implantierbaren Batterien nutzbar gemacht werden.

## Patentansprüche

1. Primärzelle, umfassend:
- ein Alkalimetall als aktives Elektrodenmaterial, insbesondere als aktives Anodenmaterial, und
- ein Elektrolyt mit einer Borverbindung,
**dadurch gekennzeichnet, dass** die Borverbindung eine Verbindung nach Formel (1), (2), (3), (4), (5), (6), (7) oder (8) ist: 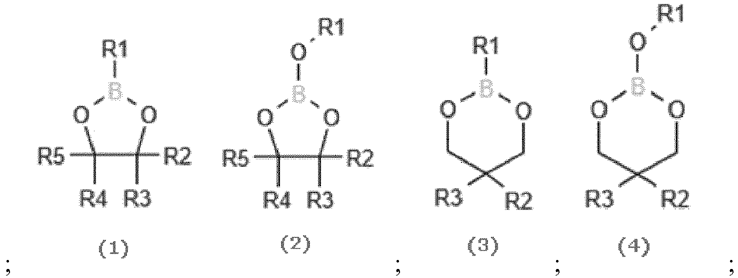 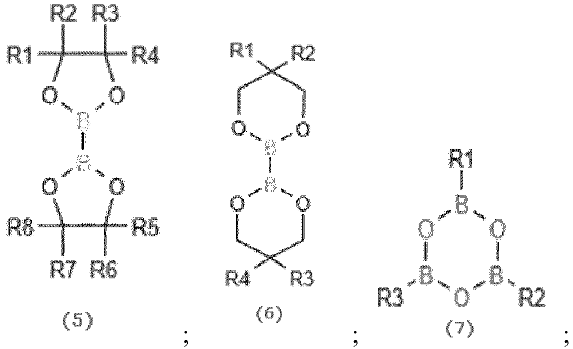 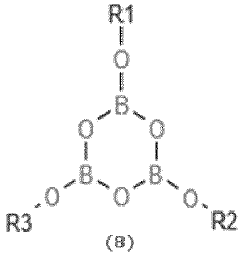 wobei
R1, R2, R3, R4, R5, R6, R7 und R8 unabhängig voneinander ausgewählt sind aus der Gruppe umfassend Wasserstoff, Alkyl, Alkenyl, Cycloalkyl, Thioether, Heterocyclen, Aryl und Heteroaryl.

2. Primärzelle nach Anspruch 1, **dadurch gekennzeichnet, dass** R1, R2, R3, R4, R5, R6, R7 und R8 unabhängig voneinander unsubstituiert sind oder einfach oder mehrfach substituiert mit wenigstens einem Substituenten ausgewählt aus der Gruppe umfassend: Alkyl, Fluoroalkyl, Alkoxy, Carbonyl, Carboxyl, Thiol, Thioalkoxid, Aryl, Ether, Thioether, Nitro, Cyano, Amino, Azido, Amidino, Hydrazino, Hydrazono, carbamoyl, Sulfo, Sulfamoyl, Sulfonylamino, Alkylaminosulfonyl, Alkylsulfonylamino und/oder Halogene, vorzugsweise ausgewählt aus der Gruppe umfassend Halogen, Fluoroalkyl, und Cyano.

3. Primärzelle nach Anspruch 1 oder 2, **dadurch gekennzeichnet, dass** die Borverbindung
- eine Verbindung nach Formel (1), wobei R1 ein Alkyl, insbesondere eine C₁-C₆-Alkyl, insbesondere Methyl, Cyclopropyl oder Cyclohexyl, oder ein Aryl, insbesondere ein Phenyl, ein Benzyl oder ein Naphtyl ist, welches unsubstituiert oder mit einem oder mehreren C₁-C₄-Alkyl, -F, -Cl, -Br, -I, -CN, -CF₃ oder -OCF₃ substituiert ist, und R2 bis R4 unabhängig voneinander ein C₁-C4 Alkyl sind,
- eine Verbindung nach Formel (2) ist, wobei R1 bis R4 unabhängig voneinander ein C₁-C₄ Alkyl ist,
- eine Verbindung nach Formel (3) ist, wobei R1 ein Alkyl, ein Alkenyl, insbesondere ein Allyl, oder ein Aryl, insbesondere ein Benzyl, Phenyl, oder Benzoat, ist, welches unsubstituiert oder mit einem C₁-C₄-Alky, -F, -Cl, -Br,-I, -CN, -CF₃ oder -OCF₃ oder eine Verbindung nach Formel (3) substituiert ist, und R2 und R3 unabhängig voneinander ein C₁-C₄ Alkyl sind,
- eine Verbindung nach Formel (4) ist, wobei R1, R2, und R3 unabhängig voneinander ein C₁-C₄ Alkyl sind,
- eine Verbindung nach Formel (5) ist, wobei R1 bis R8 unabhängig voneinander ein C₁-C₄ Alkyl, ein C₁-C₄ Alkoxy, ein C₁-C₄ Carboxyl oder ein C₁-C₄ Carboxyamin sind, wobei das Amin mit einem oder mehreren C₁-C₄ Alkylen substituiert sein kann, oder R1 bis R4 zusammen ein Aryl, insbesondere ein Phenyl bilden und/oder R5 bis R8 zusammen ein Aryl, insbesondere ein Phenyl bilden,
- eine Verbindung nach Formel (6) ist, wobei R1 bis R4 unabhängig voneinander Wasserstoff oder ein C₁-C₄ Alkyl ist
- eine Verbindung nach Formel (7), wobei R1 bis R 3 unabhängig voneinander ein Alkyl, insbesondere eine C₁-C₄-Alkyl, insbesondere Methyl, oder ein Aryl, insbesondere ein Phenyl, sind, welches unsubstituiert oder mit einem oder mehreren-F, -Cl, -Br, -I, -CN, -CF₃ oder -OCF₃ substituiert ist, oder
- eine Verbindung nach Formel (8) ist, wobei R1 bis R3 unabhängig voneinander ein C₁-C₄ Alkyl ist.

4. Primärzelle nach einem der vorherigen Ansprüche, **dadurch gekennzeichnet, dass** Borverbindung
- 4,4,5,5-Tetramethyl-2-(3,4,5-trifluorophenyl)-1,3,2-dioxaborolan,
- 2-(Bromomethyl)-4,4,5,5-tetramethyl-1,3,2-dioxaborolan;
- 2-Cyclopropyl-4,4,5,5-tetramethyl-1,3,2-dioxaborolan;
- 2-Cyclohexyl-4,4,5,5-tetramethyl-1,3,2-dioxaborolan;
- 4,4,5,5-Tetramethyl-2-(naphthalen-1-ylmethyl)-1,3,2-dioxaborolan ;
- 2-Benzyl-4,4,5,5-tetramethyl-1,3,2-dioxaborolan;
- 2-Phenyl-4,4,5,5-tetramethyl-1,3,2-dioxaborolan;
- 4,4,5,5-Tetramethyl-2-(1-naphthyl)-1,3,2-dioxaborolan ;
- 2-(4-Chlorophenyl)-4,4,5,5-tetramethyl-1,3,2-dioxaborolan ;
- 2-(4-Fluorophenyl)-4,4,5,5-tetramethyl-l,3,2-dioxaborolan;
- 4,4,5,5-Tetramethyl-2-(3,4,5-trifluorophenyl)-1,3,2-dioxaborolan;
- 2-(4-Bromophenyl)-4,4,5,5-tetramethyl-1,3,2-dioxaborolan;
- 2-(3,5-Dichlorophenyl)-4,4,5,5-tetramethyl-1,3,2-dioxaborolan ;
- 2-(2-Iodophenyl)-4,4,5,5-tetramethyl-1,3,2-dioxaborolan;
- 4-(4,4,5,5-Tetramethyl-1,3,2-dioxaborolan-2-yl)benzonitril;
- 4,4,5,5-Tetramethyl-2-[3-(trifluoromethoxy)phenyl]-l,3,2-dioxaborolan;
- 2-(4,4,5,5-Tetramethyl-1,3,2-dioxaborolan-2-yl)anilin ;
- 2-[2-(Trifluoromethyl)phenyl]-4,4,5,5-tetramethyl-1,3,2-dioxaborolan ;
- 2-[3,5-Bis(trifluoromethyl)phenyl]-4,4,5,5-tetramethyl-1,3,2-dioxaborolan;
- 2-Fluoro-5-(4,4,5,5-tetramethyl-1,3,2-dioxaborolan-2-yl)benzonitril,
- 2-Ethoxy-4,4,5,5-tetramethyl-1,3,2-dioxaborolan;
- 2-Methoxy-4,4,5,5-tetramethyl-1,3,2-dioxaborolan;
- 2-Isopropoxy-4,4,5,5-tetramethyl-1,3,2-dioxaborolan
- 2-Allyl-5,5-dimethyl-1,3,2-dioxaborinan;
- 5,5-Dimethyl-2-phenyl-1,3,2-dioxaborinan;
- 2,2'-(1,4-Phenylen)bis[5,5-dimethyl-1,3,2-dioxaborinan];
- 2-(2-Chlorophenyl)-5,5-dimethyl-1,3,2-dioxaborinan;
- 2-(1,3,2-Dioxaborinan-2-yl)benzonitril;
- 2-(2-Fluorophenyl)-5,5-dimethyl-1,3,2-dioxaborinan;
- 2-(4-Fluorophenyl)-5,5-dimethyl-1,3,2-dioxaborinan;
- 4,4'-Bis(5,5-dimethyl-1,3,2-dioxaborinan-2-yl)biphenyl;
- Ethyl 2-(5,5-Dimethyl-1,3,2-dioxaborinan-2-yl)benzoat,
- 2-(5,5-Dimethyl-1,3,2-dioxaborinan-2-yl)-6-(trifluoromethyl)benzonitril;
- 4-(Trifluoromethyl)-2-(5,5-dinethyl-1,3,2- dioxaborinan -2-YL)benzonitril,
- 2-Isopropoxy-4,4,6-trimethyl-1,3,2-dioxaborinan;
- 2-Ethoxy-4,4,6-trimethyl-1,3,2-dioxaborinan;
- 2-Methoxy-4,4,6-trimethyl-1,3,2-dioxaborinan;
- Bis(pinacolato)diboron;
- Bis(catecholato)diboron;
- Bis(N,N,N',N'-tetramethyl-L-tartaramide glycolato)diboron;
- Bis(diethyl-D-tartratglycolato)diboron; oder
- Bis(diethyl-L-tartratglycolato)diboron
- Bis(neopentylglycolato)diboron;
- Bis(hexylenglycolato)diboron;
- 2,2'-Bi-1,3,2-dioxaborinan
- Trimethylboroxin.
- 2,4,6-Triphenylboroxin,
- 2,4,6-Tris(4-fluorophenyl)boroxin;
- 2,4,6-Tris(3,4,5-trifluorophenyl)boroxin,
- 2,4,6-Tris(3,4-difluorophenyl)boroxin;
- 2,4,6-Tris(3,4-dichlorophenyl)boroxin, oder
- 2,4,6-Trimethoxyboroxin
ist.

5. Primärzelle nach einem der vorherigen Ansprüche, **dadurch gekennzeichnet, dass** die Borverbindung im Elektrolyten in einer Konzentration im Bereich von 0,001 mol*l⁻¹ bis 0,5 mol*l⁻¹ vorliegt.

6. Primärzelle nach einem der vorherigen Ansprüche, **dadurch gekennzeichnet, dass** das Alkalimetall Lithium ist, und die Primärzelle eine Lithiumbatterie.

7. Primärzelle nach einem der vorherigen Ansprüche, **dadurch gekennzeichnet, dass** der Elektrolyt ein nichtwässriger Elektrolyt ist.

8. Primärzellen nach Anspruch 7, **dadurch gekennzeichnet, dass** der nichtwässrige Elektrolyt
- ein erstes Lösungsmittel umfasst, welches ausgewählt wird aus der Gruppe bestehend aus einem Ester, einem Ether, einem Dialkylcarbonat und ein Gemisch davon, insbesondere Tetrahydrofuran, Methylacetat, Diglyme, Triglyme, Tetraglyme, 1,2-Dimethoxyethan, 1,2-Diethoxyethan, 1-Ethoxy, 2-Methoxyethan, Dimethylcarbonat, Diethylcarbonat, Dipropylcarbonat, Ethylmethylcarbonat, Methylpropylcarbonat, Ethylpropylcarbonat oder ein Gemisch davon, und
- ein zweites Lösungsmittel umfasst, welches ausgewählt ist aus der Gruppe bestehend aus einem cyclischen Carbonat, einem cyclischen Ester, einem cyclischen Amid und ein Gemische, insbesondere Propylencarbonat, Ethylencarbonat, Butylencarbonat, γ-Butyrolacton, N-Methylpyrrolidinon oder ein Gemisch davon, oder aus einem polaren nichtwässrigen Lösungsmittel wie Acetonitril, Dimethylsulfoxid, Dimethylformamid, Dimethylacetamid, oder ein Gemisch davon.

9. Primärzellen nach einem der vorherigen Ansprüche, **dadurch gekennzeichnet, dass** der Elektrolyt ein wasserfreies Alkalisalz aufweist, insbesondere ein wasserfreies Lithiumsalz, vorzugsweise LiClO₄, LiPF6, LiBF4, LiAsF₆, LiSbF₆, LiClO₄, LiAlCl₄, LiGaCl₄, LiC(SO₂CF₃)₃, LiN(SO₂CF₃)₂, LiSCN, LiO₃SCF₂CF₃, LiC₆F₅SO₃, LiO₂CF₃, LiSO₃F, LiB(C₆H₅)₄, LiCF₃SO₃ oder ein Gemisch davon.

10. Primärzelle nach einem der vorherigen Ansprüche, weiterhin umfassend ein Kohlenstoffmonofluorid als aktives Elektrodenmaterial, insbesondere als aktives Kathodenmaterial.

11. Verwendung einer Borverbindung als Elektrolytzusatz einer Primärzelle mit einem Alkalimetall als aktives Elektrodenmaterial, **dadurch gekennzeichnet, dass** die Borverbindung eine Verbindung nach Formel (1), (2), (3), (4), (5), (6), (7) oder (8) 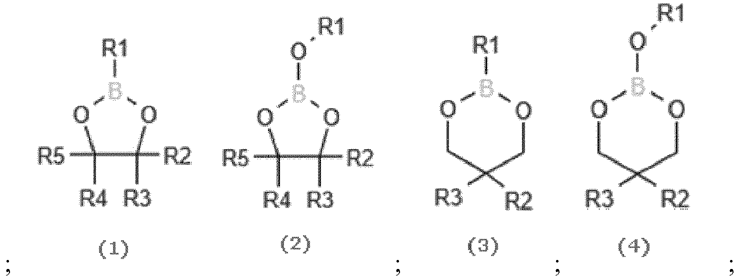 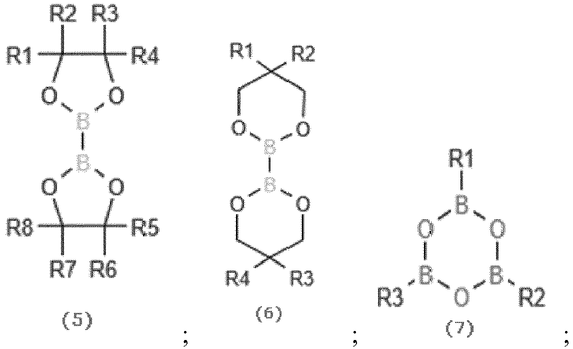 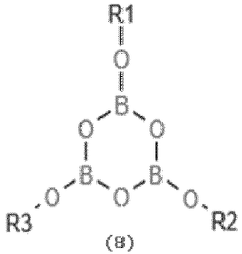 wobei
R1, R2, R3, R4, R5, R6, R7 und R8 unabhängig voneinander ausgewählt sind aus der Gruppe umfassend Wasserstoff, Alkyl, Alkylen, Cycloalkyl, Thioether, Heterocyclen, Aryl und Heteroaryl.

12. Verwendung einer Borverbindung als Elektrolytzusatz einer Primärzelle mit einem Alkalimetall als aktives Elektrodenmaterial nach Anspruch 11, **dadurch gekennzeichnet, dass** R1, R2, R3, R4, R5, R6, R7 und R8 unabhängig voneinander unsubstituiert sind oder einfach oder mehrfach substituiert mit wenigstens einem Substituenten ausgewählt aus der Gruppe umfassend: Alkyl, Fluoroalkyl, Alkoxy, Carbonyl, Carboxyl, Thiol, Thioalkoxid, Aromatik, Ether, Thioether, Nitro, Cyano, Amino, Azido, Amidino, Hydrazino, Hydrazono, carbamoyl, Sulfo, Sulfamoyl, Sulfonylamino, Alkylaminosulfonyl, Alkylsulfonylamino und/oder Halogene.

13. Verwendung einer Borverbindung als Elektrolytzusatz einer Primärzelle mit einem Alkalimetall als aktives Elektrodenmaterial nach Anspruch 11 oder 12, **dadurch gekennzeichnet, dass** Borverbindung:
- eine Verbindung nach Formel (1), wobei R1 ein Alkyl, insbesondere eine C₁-C₆-Alkyl, insbesondere Methyl, Cyclopropyl oder Cyclohexyl, oder ein Aryl, insbesondere ein Phenyl, ein Benzyl oder ein Naphtyl ist, welches unsubstituiert oder mit einem oder mehreren C₁-C₄-Alky, -F, -Cl, -Br, -I, -CN, -CF₃ oder -OCF₃ substituiert ist, und R2 bis R4 unabhängig voneinander ein C₁-C4 Alkyl sind,
- eine Verbindung nach Formel (2) ist, wobei R1 bis R4 unabhängig voneinander ein C₁-C₄ Alkyl sind,
- eine Verbindung nach Formel (3) ist, wobei R1 ein Alkyl, ein Alkenyl, insbesondere ein Allyl, oder ein Aryl, insbesondere ein Benzyl, Phenyl, oder Benzoat, ist, welches unsubstituiert oder mit einem oder mehreren C₁-C₄-Alky, -F, -Cl, -Br, -I, -CN, -CF₃ oder -OCF₃ substituiert ist, und R2 und R3 unabhängig voneinander ein C₁-C₄ Alkyl sind,
- eine Verbindung nach Formel (4) ist, wobei R1, R2, und R3 R3 unabhängig voneinander ein C₁-C₄ Alkyl sind,
- eine Verbindung nach Formel (5) ist, wobei R1 bis R8 unabhängig voneinander ein C₁-C₄ Alkyl, ein C₁-C₄ Alkoxy, ein C₁-C₄ Carboxy oder ein C₁-C₄ Carboxyamin sind, wobei das Amin mit einem oder mehreren C₁-C₄ Alkylen substituiert sein kann, oder R1 bis R4 zusammen ein Aryl, insbesondere ein Phenyl bilden und/oder R5 bis R8 zusammen ein Aryl, insbesondere ein Phenyl bilden,
- eine Verbindung nach Formel (6) ist, wobei R1 bis R4 unabhängig voneinander Wasserstoff oder ein C₁-C₄ Alkyl sind
- eine Verbindung nach Formel (7), wobei R1 bis R 3 unabhängig voneinander ein Alkyl, insbesondere eine C₁-C₄-Alkyl, insbesondere Methyl, oder ein Aryl, insbesondere ein Phenyl, sind, welches unsubstituiert oder mit einem oder mehreren-F, -Cl, -Br, -I, -CN, -CF₃ oder -OCF₃ substituiert ist, oder
- eine Verbindung nach Formel (8) ist, wobei R1 bis R3 unabhängig voneinander ein C₁-C₄ Alkyl ist.

14. Verwendung einer Borverbindung als Elektrolytzusatz einer Primärzelle mit einem Alkalimetall als aktives Elektrodenmaterial nach einem der Ansprüche 11 bis 13, **dadurch gekennzeichnet, dass** die Borverbindung
- 4,4,5,5-Tetramethyl-2-(3,4,5-trifluorophenyl)-1,3,2-dioxaborolan,
- 2-(Bromomethyl)-4,4,5,5-tetramethyl-1,3,2-dioxaborolan;
- 2-Cyclopropyl-4,4,5,5-tetramethyl-1,3,2-dioxaborolan;
- 2-Cyclohexyl-4,4,5,5-tetramethyl-1,3,2-dioxaborolan;
- 4,4,5,5-Tetramethyl-2-(naphthalen-1-ylmethyl)-1,3,2-dioxaborolan;
- 2-Benzyl-4,4,5,5-tetramethyl-1,3,2-dioxaborolan;
- 2-Phenyl-4,4,5,5-tetramethyl-1,3,2-dioxaborolan;
- 4,4,5,5-Tetramethyl-2-(1-naphthyl)-1,3,2-dioxaborolan;
- 2-(4-Chlorophenyl)-4,4,5,5-tetramethyl-1,3,2-dioxaborolan;
- 2-(4-Fluorophenyl)-4,4,5,5-tetramethyl-l,3,2-dioxaborolan;
- 4,4,5,5-Tetramethyl-2-(3,4,5-trifluorophenyl)-1,3,2-dioxaborolan;
- 2-(4-Bromophenyl)-4,4,5,5-tetramethyl-1 ,3,2-dioxaborolan;
- 2-(3,5-Dichlorophenyl)-4,4,5,5-tetramethyl-l,3,2-dioxaborolan;
- 2-(2-Iodophenyl)-4,4,5,5-tetramethyl-1,3,2-dioxaborolan;
- 4-(4,4,5,5-Tetramethyl-1,3,2-dioxaborolan-2-yl)benzonitril;
- 4,4,5,5-Tetramethyl-2-[3-(trifluoromethoxy)phenyl]-1,3,2-dioxaborolan;
- 2-(4,4,5,5-Tetramethyl-1,3,2-dioxaborolan-2-yl)anilin;
- 2-[2-(Trifluoromethyl)phenyl]-4,4,5,5-tetramethyl-1,3,2-dioxaborolan;
- 2-[3,5-Bis(trifluoromethyl)phenyl]-4,4,5,5-tetramethyl-1,3,2-dioxaborolan;
- 2-Fluoro-5-(4,4,5,5-tetramethyl-1,3,2-dioxaborolan-2-yl)benzonitril,
- 2-Ethoxy-4,4,5,5-tetramethyl-1,3,2-dioxaborolan;
- 2-Methoxy-4,4,5,5-tetramethyl-l,3,2-dioxaborolan;
- 2-Isopropoxy-4,4,5,5-tetramethyl-1,3,2-dioxaborolan;
- 2-Allyl-5,5-dimethyl-1,3,2-dioxaborinan;
- 5,5-Dimethyl-2-phenyl-1,3,2-dioxaborinan;
- 2,2'-(1,4-Phenylen)bis[5,5-dimethyl-1,3,2-dioxaborinan];
- 2-(2-Chlorophenyl)-5,5-dimethyl-1,3,2-dioxaborinan;
- 2-(1 ,3,2-Dioxaborinan-2-yl)benzonitril;
- 2-(2-Fluorophenyl)-5,5-dimethyl-1,3,2-dioxaborinan;
- 2-(4-Fluorophenyl)-5,5-dimethyl-1,3,2-dioxaborinan;
- 4,4'-Bis(5,5-dimethyl-1,3,2-dioxaborinan-2-yl)biphenyl;
- Ethyl 2-(5,5-Dimethyl-1,3,2-dioxaborinan-2-yl)benzoat;
- 2-(5,5-Dimethyl-1,3,2-dioxaborinan-2-yl)-6-(trifluoromethyl)benzonitril;
- 4-(Trifluoromethyl)-2-(5,5-dinethyl-1,3,2- dioxaborinan -2-YL)benzonitril,
- 2-Isopropoxy-4,4,6-trimethyl-1,3,2-dioxaborinan;
- 2-Ethoxy-4,4,6-trimethyl-1,3,2-dioxaborinan;
- 2-Methoxy-4,4,6-trimethyl-1,3,2-dioxaborinan;
- Bis(pinacolato)diboron;
- Bis(catecholato)diboron;
- Bis(N,N,N',N'-tetramethyl-L-tartaramide glycolato)diboron;
- Bis(diethyl-D-tartratglycolato)diboron;
- Bis(diethyl-L-tartratglycolato)diboron;
- Bis(neopentylglycolato)diboron;
- Bis(hexylenglycolato)diboron;
- 2,2'-Bi-1,3,2-dioxaborinan
- Trimethylboroxin.
- 2,4,6-Triphenylboroxin,
- 2,4,6-Tris(4-fluorophenyl)boroxin;
- 2,4,6-Tris(3,4,5-trifluorophenyl)boroxin;
- 2,4,6-Tris(3,4-difluorophenyl)boroxin;
- 2,4,6-Tris(3,4-dichlorophenyl)boroxin, oder
- 2,4,6-Trimethoxyboroxin
ist.

15. Verwendung einer Borverbindung als Elektrolytzusatz einer Primärzelle mit einem Alkalimetall als aktives Elektrodenmaterial nach einem der Ansprüche 11 bis 14, **dadurch gekennzeichnet, dass** die Primärzelle eine Lithiumbatterie ist.
